# EUROPEAN PATENT APPLICATION

(11) **EP 1 995 988 A1**
(43) Date of publication of application: **26.11.2008**
(21) Application number: 07713591.1
(22) Date of filing: 12.03.2007
(51) Int. Cl.: H04R 1/00, G02C 11/00, G02C 11/06

(54) **STRUCTURE FOR INSTALLING BONE CONDUCTION DEVICE ON EYEGLASSES**

(30) Priority: 13.03.2006 JP 2006068123
(71) Applicant: Temco Japan Co., Ltd., Tokyo 168-0062 (JP)
(72) Inventor: SASAKI, Manabu, Tokyo 168-0062 (JP)
(74) Representative: Pichat, Thierry
(86) International application number: PCT/JP2007/000209
(87) International publication number: WO 2007/105372

(57) **Abstract**

In order to provide a mounting structure for a bone conduction device to eyeglasses, wherein the bone conduction device in a communication instrument or an acoustic instrument using the device can be used by being easily mounted on a temple or earpiece of existing eyeglasses regardless of its shape and no uncomfortable feeling is suffered in use, the structure comprises: a bushing 1 fitted in a temple 11 or in an earpiece 12 of eyeglasses; and a torsion spring 2 mounted on said bushing 1; wherein an end portion of said torsion spring 2 is attached to the bone conduction device 3, a pad 4 is provided in the other end portion of said torsion spring 2, and both said bone conduction device 3 and said pad 4 are resiliently urged toward the user's head side in use by means of said torsion spring 2.

## Description

### Technical Field:

The present invention relates to a mounting structure for a bone conduction device to eyeglasses, and more specifically to a mounting structure for a bone conduction device to eyeglasses in the field of communication instruments or of acoustic instruments, in which field the bone conduction device such as bone conduction speakers, bone conduction microphones and the like is used.

### Background Art:

Earphones ordinarily used as a receiver transmit a sound issued from a sound-pressure speaker to the human eardrum through air vibrations. In use, the earphone has its front end portion fitted in the external auditory canal of the user. Consequently, the earphone is used in a condition in which the external auditory canal is clogged with the earphone.

When the earphone of the above-mentioned type is used, the external auditory canal is clogged with the earphone. This makes it difficult for the user to catch a surrounding sound, and also makes it dangerous for the user to drive a car. In this case, the user's voice in conversation unconsciously tends to become loud. Under high-temperature and high humidity environment, the external auditory canal tends to get steamed. This makes the user discomfortable, and is not good from a hygienic point of view.

As a means for catching a sound without clogging the external auditory canal, there is a receiver in which a bone conduction speaker is used. The receiver is of a first type, or of a second type. The first type of the receiver is disclosed in Japanese Patent Laid-Open No. 2001-320790, wherein a bone conduction speaker is clipped to a portion of the user's auricle. On the other side, the second type of the receiver is disclosed in Japanese Patent No. 3207158, wherein a bone conduction speaker is attached to a bend of the eyeglasses or eyeglasses running around the user's crown or neck portion. In the receiver employing the bone conduction speakers of these types, when the user is an eyeglass wearer, the bone conduction speaker is sometime brought into contact with a temple or an earpiece of the eyeglasses to make the user discomfortable in feeling. At worst, the eyeglasses are dislocated from their normal positions to make it difficult for the user to use the eyeglasses.

Under such circumstances, as is in the Japanese Patent Laid-Open No. 2005-151292 (Patent document No. 3), a receiver which is used by the eyeglass wearer has been proposed, wherein the bone conduction speaker is fixedly mounted on the temple of the eyeglasses.

The type of the receiver such as one disclosed in the patent document No. 3 has its bone conduction speaker mounted on a front end of a temple of the eyeglasses. Alternatively, a portion of the temple of the eyeglasses is formed into the bone conduction speaker. In the case of the former, according to the shape of an earpiece of the eyeglasses, the bone conduction speaker has not necessarily its vibrating surface brought into contact with a desired portion of the user. When the user moves too rapidly, the eyeglasses are often dislocated in use. Due to this, the bone conduction speaker formed in the temple of the eyeglasses is not practical in use. On the other hand, in the case of the latter, it is difficult to form a portion of the temple of the eyeglasses itself into the bone conduction speaker. Since such bone conduction speaker thus formed becomes not conventional in construction, such bone conduction speaker becomes very expensive. Also in design, the eyeglasses themselves are subjected to some limitations.

In use of a bone conduction microphone provided with substantially the same construction as that of the bone conduction speaker, the bone conduction microphone is also mounted on the eyeglasses to make the user confronted with another problem.

Patent document No 1: Japanese Patent Laid-open No. 2001-320790;
Patent document No 2: Japanese Patent No: 3207158;
Patent document No 3: Japanese Patent Laid-open No. 2005-151292; and
Patent document No 4: Japanese Patent No: 3556151.

### SUMMARY OF THE INVENTION

### PROBLEMS TO BE SOLVED BY THE INVENTION

As described in the above, an eyeglass-wearer often encounters with problems when he or she uses an acoustic instrument or a communication instrument such as sending and receiving device provided with a bone conduction device. The present invention was made in view of the problems. Consequently, it is an object of the present invention to provide a mounting structure for a bone conduction device to eyeglasses in the field of communication instruments or of acoustic instruments, in which field the bone conduction device such as bone conduction speakers, bone conduction microphones and the like is used. The mounting structure for the bone conduction device to the eyeglasses enables the user to use the bone conduction device without suffering from any feeling of physical disorder even when the device is mounted on a temple or earpiece of the eyeglasses.

### MEANS FOR SOLVING THE PROBLEMS

In order to solve the above problems described in a claim 1 of the subject application, the present invention was made to provide a mounting structure for a bone conduction device to eyeglasses, wherein the mounting structure of the present invention is characterized in that the structure is constructed of: a bushing fitted in a temple or in an eyepiece of eyeglasses; and, a torsion spring mounted on the busing. An end portion of the torsion spring is attached to the bone conduction device. In the other end portion of the torsion spring, there is provided the above-mentioned pad. Both the above-mentioned bone conduct device and the pad are resiliently urged toward the user's head side in use by means of the torsion spring.

In order to solve the above problems, the present invention provides a mounting structure for a bone conduction device to eyeglasses, wherein the mounting structure is characterized in that the structure is constructed of: a bushing, in which a temple or an eyepiece of eyeglasses is fitted; and, a torsion spring mounted on the busing. The bone conduction device is mounted on an end portion of the torsion spring. On the other hand, the other end portion of the torsion spring is extended up to a front end portion of the spring along the earpiece of the eyeglasses. The mounting structure of the present invention is characterized in that: the bone conduct device mentioned above is resiliently urged toward the user's head side in use by means of the torsion spring.

Preferably, the bushing is provided with a slit extending over the full length of the bushing, and is expandable at the slit thereof so as to allow the bushing to be mounted on a desired portion of the temple or of the earpiece. The bushing has at least one of its opposite axial ends tapered to form a tapered surface. The bushing is inserted into the torsion spring from the above tapered surface.

Further, preferably the bone conduction device is mounted on an end portion of the torsion spring so as to be rotatable in the vertical direction, and the torsion spring is coated with resin.

### Advantages of the Invention

The present invention is configured as mentioned above and has advantages such as: simple and light structure; direct and easy mounting of the bone conduction device on an earpiece or temple of eyeglasses in use; high versatility in that it can be mounted to existing eyeglasses regardless of the shape of the temple or earpiece of the eyeglasses; and clear transmission and reception not to impair the characteristics of the bone conduction device because of the constant urging of the bone conduction device by the torsion spring so as to bring it into contact with , for example, a cranial bone portion slightly in front of a tragus.

### Best Mode for Carrying Out the Invention

Next, the best mode for carrying out the present invention will be described based on the appended drawings. In the following, a bone conduction speaker will be described as a bone conduction device, but the mounting structure is similar for a bone conduction microphone.

The mounting structure for a bone conduction speaker to eyeglasses according to the present invention comprises a bushing 1 fitted in a temple 11 or in an earpiece 12 (including the case of straddling both of them) of eyeglasses and a torsion spring 2 mounted on the bushing 1, wherein a bone conduction speaker 3 is mounted on an end portion of the torsion spring 2. The torsion spring 2 is coated with resin when appropriate, for the sake of good appearance and in view of effects on the skin.

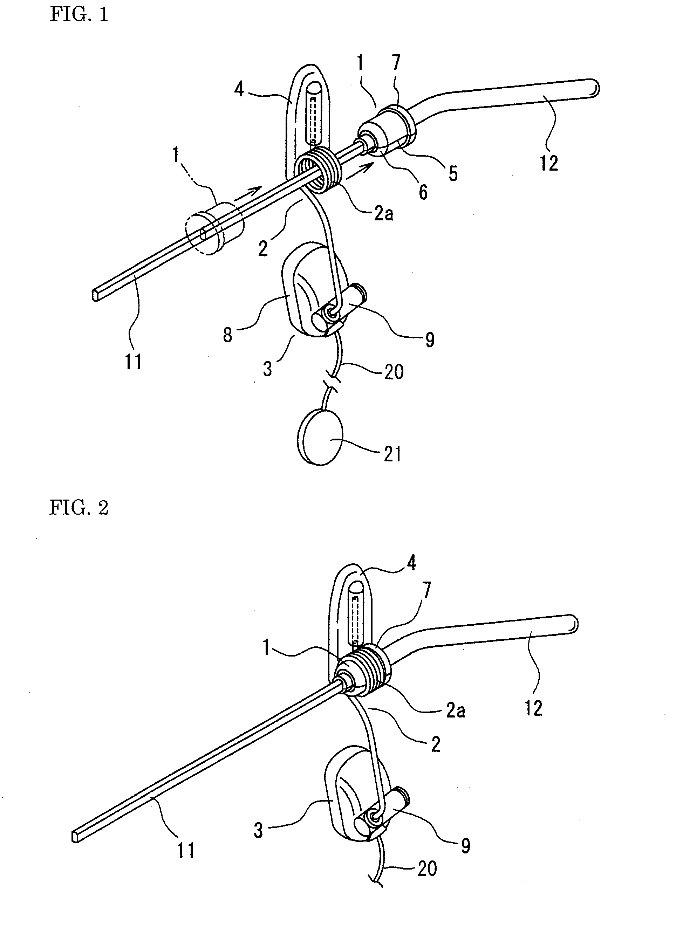

In the embodiment shown in Figures 1 to 4, a pad 4 is mounted on the end portion of the torsion spring 2 opposite the side where the bone conduction speaker 3 is mounted. The pad 4 plays the role of dispersing the load applied to the end portion of the spring so as to prevent that load from concentrating in a portion slightly behind the temple where the end portion of the spring is received and thereby causing pain in that portion. The pad 4 is mounted by, for example, a method in which a narrow vertical hole is provided in a side surface of the pad 4 and the end portion of the spring is inserted therein.

The bushing 1 is made of rubber or plastic having a certain degree of resiliency and is moderately elastic so that the temple 11 or the earpiece 12 of the eyeglasses can be tightly inserted therein. The shape may be of a mere cylinder, but preferably it is in the form of a cylinder over the full length of which is provided a slit 5, as shown, for the sake of easier mounting. In the case of this configuration, the bushing 1 can be easily fitted to a desired portion of the temple 11 or the earpiece 12 by being expanded at the slit 5. Then the bushing 1 securely holds the temple 11 or the earpiece 12 by means of its restoring force and is resistant to movement.

The torsion spring 2 is mounted on the bushing 1 by this operation: the torsion spring 2 with its coil portion 2a having the temple 11 inserted therein is moved toward the bushing 1 and the bushing 1 is set in the coil portion 2a (Figure 2). In order to facilitate this operation, preferably a tapered surface 6 is provided in an end surface of the bushing 1. Although the tapered surface 6 may be provided in both ends of the bushing 1, usually it is provided only in one end side as shown, and a retaining flange 7 is provided on the other end side.

The bushing 1 may be inserted into the coil portion 2a either from the earpiece 12 side (solid lines in Figure 1) or from the frame side (virtual lines in Figure 1).

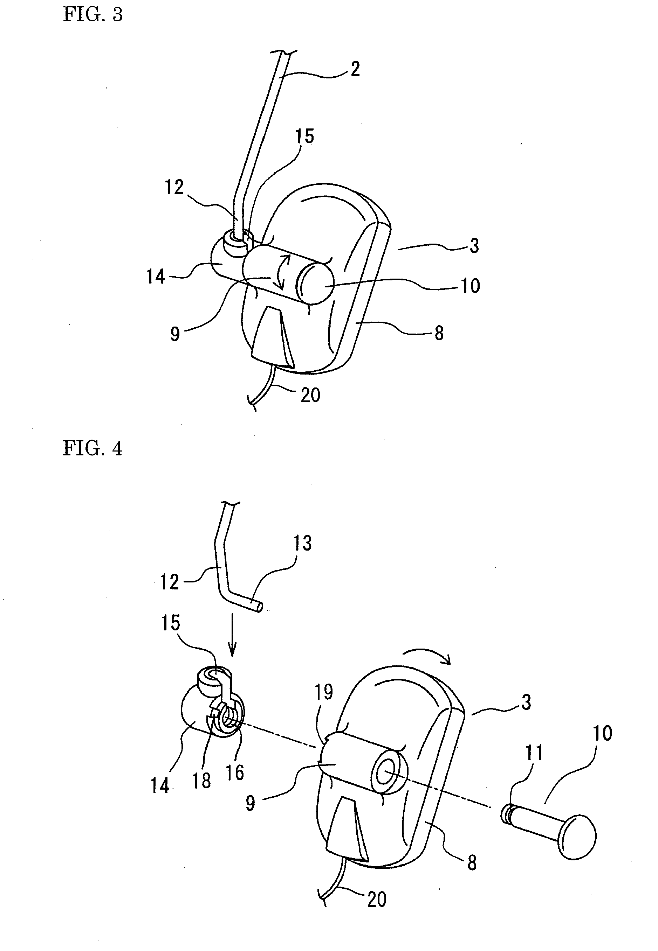

The bone conduction speaker 3 is mounted on one end (the downward side when worn) of the torsion spring 2. Figures 3 and 4 show an example of mounting methods thereof, wherein on the outer surface of a speaker case 8 is formed a pivot cylinder 9 into which a hollow pivot 10 is rotatably inserted. The hollow pivot 10 has such a length that the insertion end thereof is slightly exposed from the pivot cylinder 9, and a circumferential groove 11 is formed on the outer circumferential surface of the portion exposed from the pivot cylinder 9.

A horizontally extending pivot portion 13 is formed at the tip end portion of the torsion spring 2 via a bended portion 12, and a portion from the bended portion 12 to the pivot portion 13 is housed in an anti-rotational member 14 with the tip end of the pivot portion 13 protruding. A housing portion 15 for housing the portion from the bended portion 12 to the pivot portion 13 from above is formed in the anti-rotational member 14 from the upper surface through to a side surface. The side surface portion of the housing portion 15 is somewhat protruding and in the inner surface of that protruding portion is formed a locking ring 16 for engagement with the circumferential groove 11 at the tip end portion of the hollow pivot 10.

In mounting, the portion from the bended portion 12 to the pivot portion 13 at the spring end is housed in the housing portion 15 of the anti-rotational member 14 from above, and the tip end portion of the pivot portion 13 protruding from there is inserted into the hollow portion of the hollow pivot 10 exposing from the pivot cylinder 9. Then the tip end of the hollow pivot 10 is pressed into the locking ring 16 and the locking ring 16 is caused to bite on the circumferential groove 11 to lock it.

Thus the speaker case 8 is supported on the spring end while being rotatable about the hollow pivot 10 as an axis. The purpose of thus making the speaker case 8 rotatable is to cause its vibrating surface to contact the surface of any user's head tightly as a plane by adapting to the shape thereof. Therefore, its rotational range need not be so wide and rather restriction of its movement will provide stability.

Therefore preferably, a stopper 18 is provided in the anti-rotational member 14 at the portion abutting the end surface of the pivot cylinder 9 and a concave portion 19 for receiving the stopper 18 is provided in the end surface of the pivot cylinder 9 in order to restrict the rotational range. In this case, the stopper 18 abuts both end surfaces of the concave portion 19 to restrict the rotational range of the pivot cylinder 9, that is, the speaker case 8 with respect to the anti-rotational member 14. Although the stopper 18 and the concave portion 19 are shown in the outer surface side in Figure 4 for the convenience of explanation, usually they are arranged in the inner side so as not to be conspicuous (see Figure 3).

A lead 20 is drawn out of the speaker case 8 from the main body of the bone conduction speaker 3, and the tip end thereof is connected to a main body 21 which contains communication devices. The main body 21 may be a pendant type one which is hung from the neck, or may be a brooch type one which is clipped or pinned to a pocket, for example. The main body 21 is wirelessly connected with various acoustic source devices.

In this embodiment, the bounce force of the torsion spring 2 acts in the direction in which its both ends expand. Therefore, when the speaker case 8 is brought into contact with and pushed by a portion slightly in front of the tragus in use, the speaker case 8 does not escape and continues to tightly contact with the surface of the head with moderate pressure since the opposite spring end is held and stopped by the cranial bone through the pad 4. Thus excellent transmission and reception through the bone conduction speaker 3 is enabled.

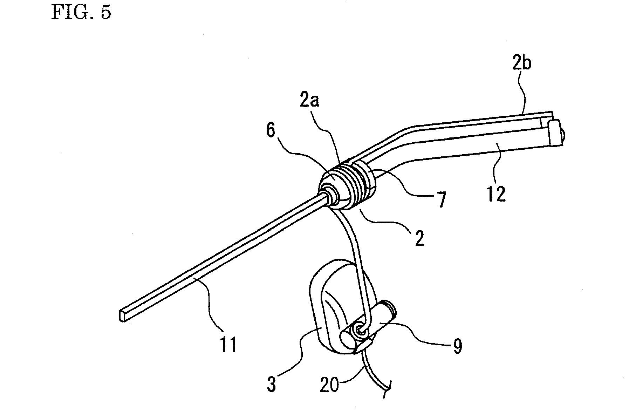

In an embodiment shown in Figure 5, the pad in the above embodiment is not used; a corresponding spring end 2b is extended along the earpiece 12 up to its tip end portion and fixed by appropriate means such as being wound around that tip end portion or being hooked in a hole provided therein. The rest of the configuration is pursuant to the above embodiment.

This embodiment provides further simplicity and a neat appearance since the anti-rotational function portion, that is, the spring end 2b portion being integral with the earpiece 12 is hidden behind an ear. In addition, like the above embodiment, tight contact of the bone conduction speaker 3 with the surface of a head with moderate pressure is maintained when the speaker case 8 is pushed in use, since the spring end 2b on the opposite side is securely fixed to the earpiece 12.

As described above, the mounting structure for a bone conduction device to eyeglasses according to the present invention is of a simple configuration, easily handled, usable for most existing eyeglasses, not conspicuous when worn, and can be used comfortably. Further, the effect of the torsion spring 2 gives the bone conduction device excellent tight contact with the surface of a head with moderate pressure, thereby providing good usability.

Although this invention has been described with respect to the most preferable embodiments thereof in a certain degree of particularity, it is obvious that a wide range of different embodiments can be configured without departing from the spirit and the scope of this invention. Therefore, this invention is not limited to a particular embodiment thereof except as defined in the appended claims.

### Brief Description of the Drawings

Figure 1 is a perspective view showing a state before assembly in an embodiment of the present invention;
Figure 2 is a perspective view showing the assembled state in an embodiment of the present invention;
Figure 3 is a perspective view showing the configuration of the portion where a bone conduction speaker is mounted in an embodiment of the present invention;
Figure 4 is an exploded perspective view of the portion where a bone conduction speaker is mounted in an embodiment of the present invention; and
Figure 5 is a perspective view showing the assembled state in another embodiment of the present invention.

## Claims

1. A mounting structure for a bone conduction device to eyeglasses, **characterized in that** the structure comprises: a bushing fitted in a temple or in an earpiece of eyeglasses; and a torsion spring mounted on said bushing; wherein an end portion of said torsion spring is attached to the bone conduction device, a pad is provided in the other end portion of said torsion spring, and both said bone conduction device and said pad are resiliently urged toward a user's head side in use by means of said torsion spring.

2. A mounting structure for a bone conduction device to eyeglasses, **characterized in that** the structure comprises: a bushing, in which a temple or an earpiece of eyeglasses is fitted; and a torsion spring mounted on said bushing; wherein the bone conduction device is mounted on an end portion of said torsion spring, the other end portion of said torsion spring is extended up to a front end portion of the spring along said earpiece of the eyeglasses and is fixed thereto, and said bone conduction device is resiliently urged toward a user's head side in use by means of said torsion spring.

3. The mounting structure for a bone conduction device to eyeglasses according to claim 1 or 2, wherein said bushing is provided with a slit extending over a full length of said bushing, and is expandable at said slit thereof so as to allow said bushing to be mounted on a desired portion of said temple or of said earpiece.

4. The mounting structure for a bone conduction device to eyeglasses according to any of claims 1 to 3, wherein said bushing has at least one of its opposite axial ends tapered to form a tapered surface, and is inserted into said torsion spring from said tapered surface.

5. The mounting structure for a bone conduction device to eyeglasses according to any of claims 1 to 4, wherein said bushing has a retaining flange in an end side.

6. The mounting structure for a bone conduction device to eyeglasses according to any of claims 1 to 5, wherein said bone conduction device is mounted on an end portion of said torsion spring so as to be rotatable in a vertical direction.

7. The mounting structure for a bone conduction device to eyeglasses according to any of claims 1 to 6, wherein said torsion spring is coated with resin.
